# EUROPÄISCHE PATENTSCHRIFT

(11) **EP 1 383 323 B1**
(45) Veröffentlichungstag und Bekanntmachung des Hinweises auf die Patenterteilung: **06.06.2007**
(21) Anmeldenummer: 03102112.4
(22) Anmeldetag: 11.07.2003
(51) Int. Cl.: H04N 7/025

(54) **Verfahren zur Übertragung von Nicht-Video-Bilddaten über eine Video-Schnittstelle**
Method of transmission of non-picture data over video interface
Procédé de transmission de données non-vidéo à travers une interface vidéo

(30) Priorität: 20.07.2002 DE 10233116
(43) Veröffentlichungstag der Anmeldung: 21.01.2004
(73) Patentinhaber: ROBERT BOSCH GMBH, 70442 Stuttgart (DE)
(72) Erfinder: Beutnagel-Buchner, Uwe, 70186, Stuttgart (DE); Kirschbaum, Axel, 75417, Muehlacker (DE); Lindner, Markus, 70178, Stuttgart (DE)

(56) Entgegenhaltungen:
- WO-A-01/30014
- GB-A- 2 231 470
- US-A- 4 617 657
- US-A- 5 719 634
- US-A- 5 859 670
- "FERNSEHBILDER ALS DATENTRAGER" , FUNKSCHAU, FRANZIS-VERLAG K.G. MUNCHEN, DE, VOL. 60, NR. 20, PAGE(S) 32-36 XP000045248 ISSN: 0016-2841 * Seite 33, Spalte 1, Zeile 7 - Zeile 47 * * Seite 33, Spalte 3, Zeile 12 - Zeile 18 * * Seite 34, Spalte 2, Zeile 1 - Zeile 12 * * Abbildungen 1-3 *

## Beschreibung

### Stand der Technik

Die vorliegende Erfindung betrifft ein Verfahren zur Übertragung von Nicht-Video-Bilddaten über eine Video-Schnittstelle von einer Sendereinheit an eine Empfängereinheit. Die vorliegende Erfindung sowie die ihr zugrunde liegende Problematik werden in Bezug auf ein Kraftfahrzeugsystem erläutert, bei dem eine Übertragung von Nicht-Video-Bilddaten von einer Zentraleinheit an ein Anzeigeinstrument des Kraftfahrzeugsystems erfolgt.

Früher wurden in Automobilen verschiedene Einzelgeräte mit eigenen graphischen Benutzeroberflächen zur Anzeige von Fahrerinformationen eingesetzt, wie z.B. Radio, Telefon, Navigationshilfe, etc. Dabei hat sich herausgestellt, dass es unkomfortabel ist, jedes Einzelgerät mit einer graphischen Benutzeroberfläche zu versehen, weil dadurch Abbildungen nur auf einem verhältnismäßig kleinen jeweiligen Fahrerinformations-Display des Einzelgerätes, beispielsweise ein Flüssigkristall-Display, abgebildet werden können.

Infolge dieses Nachteils setzen die Kraftfahrzeughersteller heutzutage auf sogenannte gemeinsame Fahrerinformations-Displays. Diese sind zentral in der Mittelkonsole oder dem Kombi-Anzeigeinstrument - im folgenden mit "Anzeigeinstrument" bezeichnet - des Kraftfahrzeuges untergebracht und zeigen die von verschiedenen Einzelinstrumenten herrührenden Fahrerinformationen zentral an.

Um nun mit einem solchen Produkt erfolgreich zu sein, ist eine hohe Qualität der Graphik, eine schnelle Datenübertragung und eine Übertragung von großen Datenmengen von der Zentraleinheit an das gemeinsame Anzeigeinstrument des Kraftfahrzeuges zu fordern.

Herkömmliche Anzeigesysteme in Kraftfahrzeugen werden über eine CAN-Schnittstelle angesteuert. Seit einiger Zeit werden TFT-Displays verwendet, um neben Standardanzeigen, wie Tachometer oder Warnsymbolen, "Multi-Media-Inhalte" darstellen zu können. Hierzu zählen beispielsweise Video-Quellen, wie eine Rückfahr- oder eine Nachtsicht-Kamera.

Für eine zentrale, optisch attraktive und sinnfällige Gesamtdarstellung muss eine große Datenmenge von der Zentraleinheit an das Anzeigeinstrument des Kraftfahrzeuges übertragen werden, um beispielsweise Navigationsdaten wiederzugeben oder den flüchtigen Speicher des Anzeigeinstrumentes zu aktualisieren.

Als nachteilig bei den CAN-Schnittstellen hat sich die Tatsache herausgestellt, dass diese den hohen Anforderungen einer schnellen Datenübertragung von großen Datenmengen nicht gewachsen sind und bereits mit anderen Aufgaben aus- bzw. überlastet sind.

Die der vorliegenden Erfindung zugrunde liegende Problematik besteht also allgemein darin, ein Verfahren zu entwickeln, mit welchem ohne große Modifikationen an der bestehenden Hardware eine schnelle Datenübertragung großer Datenmengen möglich ist.

Aus dem Dokument XP 45248 (Fernsehbilder als Datenträger) ist eine Fernsehbildübertragung bekannt, bei der das Fernsehbild als Transportmittel für Daten verwendet wird. Hierbei ist ein Datenfenster in der linken oberen Bildschirmecke vorgesehen, das entweder gar nicht oder nur sehr gering sichtbar ist. Aus der US 5,719,634 ist eine Vorrichtung zum Speichern von digitalen Daten in einem analogen Bilddatensignal gezeigt. Die digitalen Daten, zum Beispiel Textdaten, werden auf eine Graustufenskala abgebildet und als ein analoges, horizontales Zeilensignal eines Bildes in einem Speicher abgelegt. Die GB 2231470 A und die US 5,859670 zeigen Verfahren zur Teletext-Übertragung und -Decodierung. Die US 4,617,657 zeigt ein Verfahren zur Übertragung von einzelnen Datenpaketen. Die WO 01/30014 A1 zeigt ein Verfahren zur Übertragung einzelner Datenbits.

### VORTEILE DER ERFINDUNG

Das erfindungsgemäße Verfahren mit den Merkmalen des Anspruchs 1 weist gegenüber den bekannten Verfahren den Vorteil auf, dass eine schnelle Datenübertragung von großen Datenmengen möglich ist, ohne die bestehenden Komponenten modifizieren zu müssen.

Hierbei wird eine bereits vorhandene Video-Schnittstelle für eine schnelle Datenübertragung und einer hohen Datenübertragungsrate ohne Modifikationen an den bestehenden Komponenten ausgenützt.

Erfindungsgemäß wird die Datenübertragung von der Sendereinheit zu der Empfängereinheit über eine zusätzliche CAN-Schnittstellenverbindung initiiert. Somit kann über die bidirektionale CAN-Schnittstellenverbindung mittels beispielsweise einer Computer-Steuereinheit der Sendereinheit von der Empfängereinheit angezeigt werden, dass ein Beginn der Datenübertragung bevorsteht.

In den Unteransprüchen finden sich vorteilhafte Weiterbildungen und Verbesserungen des in Anspruch 1 angegebenen Verfahrens.

Gemäß einer weiteren bevorzugten Weiterbildung wird eine Bestätigungsnachricht, beispielsweise mittels Übermittlung von Prüfsummen, von der Empfängereinheit an die Sendereinheit über die CAN-Schnittstellenverbindung, übertragen. Somit kann erreicht werden, dass im Falle eines Ausbleibens einer positiven Bestätigungsnachricht bzw. einer fehlerhaften Bestätigungsnachricht eine erneute Datenübertragung durchgeführt wird, nämlich so lange, bis eine positive Bestätigungsnachricht für eine Bestätigung einer korrekten Datenübertragung von der Empfängereinheit an die Sendereinheit gesendet wird.

Gemäß einer weiteren bevorzugten Weiterbildung wird der nicht-sichtbare Bereich des Video-Bildes zusätzlich für die Datenübertragung verwendet. Somit wird der gesamte Bereich, sowohl der sichtbare als auch der nicht-sichtbare Bereich, des Video-Bildes für die Datenübertragung verwendet.

Gemäß einer weiteren bevorzugten Weiterbildung wird als Datenübertragungsformat ein Interlaced-Video-Format, bei dem sich jeweils ein Datenpaket aus zwei in den geraden und ungeraden Halbbildern des Video-Bildes abgelegten Teilpaketen zusammensetzt, oder ein differentielles Übertragungsformat, beispielsweise ein LVDS-Format, verwendet. Allerdings sind andere Übertragungsformate denkbar. Entscheidend ist lediglich die Möglichkeit einer Codierung bzw. Decodierung der übertragenen Daten.

Gemäß einer weiteren bevorzugten Weiterbildung werden mehrere Datenpakete in einem Video-Bild abgelegt. Ebenfalls ist es denkbar, dass ein Datenpaket aus mehreren Video-Bildinhalten zusammengesetzt wird.

Gemäß einer weiteren bevorzugten Weiterbildung kann die Empfängereinheit ausschließlich für eine Übertragung von Nicht-Video-Bilddaten verwendet werden.

Gemäß einer weiteren bevorzugten Weiterbildung werden die von der Empfängereinheit empfangenen Video-Bilddaten mittels einer Synchronisiereinrichtung und einer Daten-Formatiereinrichtung decodiert und weiterverarbeitet, beispielsweise abgespeichert.

### ZEICHNUNGEN

Ausführungsbeispiele der Erfindung sind in den Zeichnungen dargestellt und in der nachfolgenden Beschreibung näher erläutert.

In den Figuren zeigen:
- Fig. 1: ein vereinfachtes Blockschaltbild eines Daten-übertragungsverfahrens gemäß einem Ausführungsbeispiel der vorliegenden Erfindung;
- Fig. 2: ein detailliertes Blockschaltbild eines Übertragungsverfahrens gemäß eines Ausführungsbeispiels der vorliegenden Erfindung; und
- Fig. 3: eine schematische Ansicht einer Codierung der Daten in einem Video-Bild gemäß einem Ausführungsbeispiel der vorliegenden Erfindung.

### BESCHREIBUNG DER AUSFÜHRUNGSBEISPIELE

In den Figuren bezeichnen gleiche Bezugszeichen gleiche oder funktionsgleiche Komponenten.

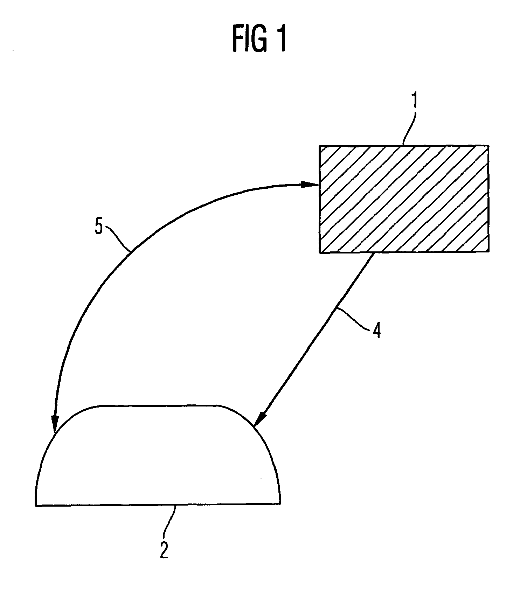

Fig. 1 illustriert eine vereinfachte Darstellung eines Übertragungsverfahrens gemäß einem Ausführungsbeispiel der vorliegenden Erfindung. Von einer Zentraleinheit 1, welche sich beispielsweise in einem Kraftfahrzeugsystem befindet, werden Nicht-Video-Daten über eine Video-Schnittstellenverbindung 4, welche vorteilhaft bereits in dem System vorhanden ist, im vorzugsweise sichtbaren Bereich zu einem Anzeigeinstrument 2 des Kraftfahrzeugsystems übertragen. Dies geschieht mittels einer unidirektionalen Datenübertragung.

In dem System ist eine zweite Schnittstellenverbindung 5, beispielsweise eine CAN-Schnittstellenverbindung 5, zwischen der Zentraleinheit 1 und dem Anzeigeinstrument 2 vorgesehen. Diese dient beispielsweise einem Datenaustausch über den Beginn der entsprechenden Datenübertragung bzw. einer Rückbestätigung einer durchgeführten Datenübertragung, d.h. inwiefern eine fehlerbehaftete bzw. fehlerfreie Datenübertragung über die Video-Schnittstellenverbindung 4 erfolgte.

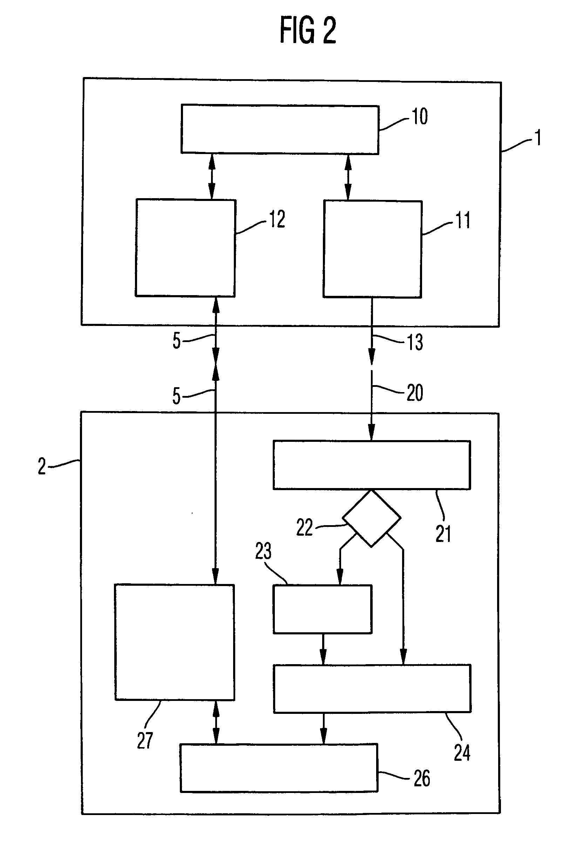

Im folgenden wird anhand des detaillierteren Blockschaltbilds in Fig. 2 das Datenübertragungsverfahrens gemäß einem Ausführungsbeispiel der vorliegenden Erfindung genauer erläutert.

Die Zentraleinheit 1 weist beispielsweise eine erste Speichereinrichtung 10 auf, in welcher die zu übertragenden Nicht-Video-Daten abgelegt werden können. Ein in der Zentraleinheit 1 vorgesehener Graphik-Controller 11 liest die in der ersten Speichereinrichtung 10 abgelegten Daten aus, die analog zu Bildinformationen abgespeichert sind, wobei die Farbtiefe des Graphik-Controllers 11 der Zentraleinheit 1, die beispielsweise 16 Bit oder 24 Bit beträgt, die BitZahl der einzelnen Datenworte bestimmt. Der Graphik-Controller 11 gibt diese Daten vorzugsweise wie normale Video-Bilddaten als Video-Signal am Video-Ausgang 13 aus.

Beispielsweise sendet die Zentraleinheit 1 eine Nachricht an das Anzeigeinstrument 2, in der eine Übertragung von Daten angekündigt wird. Daraufhin baut eine erste Steuereinheit 12 der Zentraleinheit 1 ein Datenpaket auf, welches in die Speichereinrichtung 10 abgelegt wird. Der Graphik-Controller 11 der Zentraleinheit 1 codiert die zu übertragenden Daten als Video-Bilddaten in einem Video-Signal. Die Anordnung der Daten in dem Video-Signal ist von dem verwendeten Signal und der Farbtiefe abhängig. Prinzipiell können alle Video-Codierungen verwendet werden, wie beispielsweise ein Interlaced-Video-Format. Entscheidend ist lediglich, dass der Empfänger, beispielsweise eine Synchronisiereinrichtung 21 des Anzeigeinstruments 2, die codierten Daten decodieren und somit verarbeiten kann.

Die als Video-Signal an das Anzeigeinstrument 2 übertragenen Daten werden von der oben bereits erwähnten Synchronisiereinrichtung 21 des Anzeigeinstruments 2 empfangen, mittels einer Selektiereinrichtung 22 selektiert und mittels einer Daten-Formatiereinrichtung 23 in das ursprüngliche Format umgewandelt. Die Selektiereinrichtung 22 und die Daten-Formatiereinrichtung 23 sind vorteilhaft in dem Anzeigeinstruments 2 integriert.

An dieser Stelle sei erwähnt, dass sowohl Video-Bilddaten, als auch Nicht-Video-Bilddaten auf diesem Verfahren übertragen werden können. Die Selektiereinrichtung 22 selektiert dabei die Nicht-Video-Bilddaten von den Video-Bild-daten für eine etwaige anschließende Formatierung. Bei einer Übertragung von Video-Bilddaten erfolgt keine Datendecodierung, wie in Fig. 2 dargestellt ist. In diesem Fall werden die Video-Bilddaten direkt von der Selektiereinrichtung 22 an eine Ausgabe-Einheit bzw. Speicher-Schnittstelle 24 gesendet, die vorteilhaft ebenfalls in dem Anzeigeinstrument 2 integriert ist.

Die decodierten Daten werden von der Ausgabe-Einheit 24 des Anzeigeinstruments 2 in eine zweite Speichereinrichtung 26, beispielsweise ein flüchtiger Arbeitsspeicher des Anzeigeinstruments 2, geschrieben. Eine Weiterverarbeitung der abgespeicherten Daten erfolgt mittels einer zweiten Steuereinheit 27, die vorteilhaft in dem Anzeigeinstrument 2 vorgesehen ist.

Da hohe Anforderungen insbesondere an Anzeigesysteme in Kraftfahrzeugen gestellt werden, ist eine Fehlererkennung bzw. eine Fehlerkorrektur vorteilhaft vorgesehen.

Zu diesem Zweck kann beispielsweise mit dem übertragenen Video-Signal ein spezielles weiteres Video-Signal übertragen werden, welches zusätzliche Informationen zur Fehlerkorrektur enthält. Dies kann beispielsweise in Form von für Daten nicht notwendigen Synchronisationssignalen erfolgen.

Ferner ist für eine fehlerfreie Übertragung vorteilhaft eine bidirektionale Schnittstellenverbindung 5, beispielsweise eine CAN-Schnittstellenverbindung 5 oder dergleichen, zwischen der ersten Steuereinheit 12 der Zentraleinheit 1 und der zweiten Steuereinheit 27 des Anzeigeinstruments 2 vorgesehen. Beispielsweise errechnet die zweite Steuereinheit 27 des Anzeigeinstruments 2 eine Prüfsumme aus den empfangenen und in der Speichereinrichtung 26 abgespeicherten Daten. Diese Prüfsumme wird über die Schnittstellenverbindung 5 an die erste Steuereinheit 12 der Zentraleinheit 1 übertragen und dort mit der Prüfsumme der gesendeten Daten verglichen.

Stimmen die verglichenen Prüfsummen überein, erfolgte eine fehlerfreie Übertragung des zu übertragenden Datenpakets und das nächste Datenpaket kann übertragen werden.

Stimmen die zu vergleichenden Prüfsummen nicht überein, erfolgte eine fehlerbehaftete Datenübertragung eines Datenpakets und eine Wiederholung des Datentransfers findet vorzugsweise so lange statt, bis die zu vergleichenden Prüfsummen eine fehlerfreie Datenübertragung ergeben.

Die Schnittstellenverbindung 5 kann ferner dazu dienen, den Datentransfer zu initiieren oder zwischen einem Video-Bild-daten- und einem Nicht-Video-Bilddaten-Transfer zu selektieren.

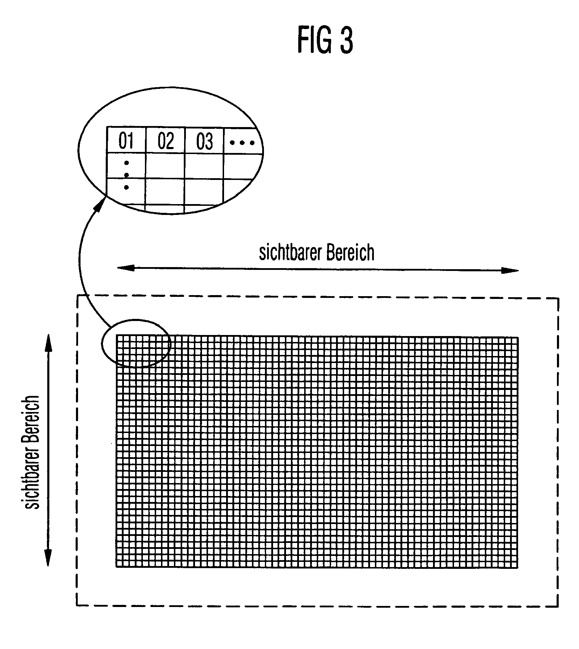

Wie in Fig. 3 dargestellt ist, kann durch die Codierung bzw. Decodierung der zu übertragenden Daten der sichtbare Bereich des Video-Bildes für die Datenübertragung verwendet werden. Selbstverständlich kann zusätzlich der nicht-sichtbare Bereich Daten enthalten. Beispielsweise kann der sichtbare Bereich des Bildes Video-Bildinformationen und der nicht-sichtbare Bereich Nicht-Video-Daten enthalten. Die Datenpaketgröße kann selbstverständlich von der Bildgröße abweichen. Beispielsweise können mehrere Datenpakete in einem Bild abgelegt sein oder ein Datenpaket kann sich aus mehreren Bildinhalten zusammensetzen. Hier sind keine Grenzen gesetzt.

Die einzelnen Kästchen in Fig. 3 des sichtbaren Bereichs stellen jeweils ein Pixel dar, wobei in jedem Pixel ein Datenpaket enthalten sein kann. Die Größe des Datenpaketes ist abhängig von der Farbtiefe der Pixel und kann beispielsweise 16 Bit oder 24 Bit betragen.

Die zusätzliche bidirektionale Leitung ermöglicht eine Initiierung des Transfers, das Bestätigen der Übertragung sowie die Übermittlung von Prüfsummen.

Die vorliegende Erfindung weist den Vorteil auf, dass eine hohe Datenrate erzielbar und eine große Übertragungssicherheit gewährleistet ist. Durch die Nutzung zumindest des sichtbaren Video-Bildbereichs wird eine deutlich höhere Datenrate erreicht als bei einer Übertragung über eine beispielsweise CAN-Schnittstellenverbindung.

Ferner sind meistens keine zusätzlichen Komponenten erforderlich, da die Video-Verbindung, wie vorstehend beschrieben, sowie eine CAN-Schnittstelle bei Kraftfahrzeugsystemen bereits vorhanden sind. Somit müssen keine weiteren Modifikationen des Kraftfahrzeugsystems vorgenommen werden.

Da der sichtbare Bereich des Video-Bildes für die Datenübertragung genutzt wird, kann ein Standard-Graphik-Controller zum Senden der Daten benutzt werden. Lediglich der Video-Eingang 20 des Anzeigeinstruments 2 muss derart modifiziert werden, dass ein Decodieren des Video-Signals in die ursprünglichen Farbwerte des Senders bzw. der Zentraleinheit 1 mittels der Synchronisiereinrichtung 21 möglich ist. Die Steuereinheit 27 des Anzeigeinstruments 2 ist am gesamten Datentransfer nicht beteiligt (außer zur Initiierung, Bestätigung oder Prüfsummenberechnung) und steht somit für weitere Aufgaben unbelastet zur Verfügung.

Obwohl die vorliegende Erfindung anhand eines Ausführungsbeispiels vorstehend beschrieben wurde, ist sie darauf nicht beschränkt, sondern auf vielfältige Weise modifizierbar.

Beispielsweise kann im Falle einer Video-Bilddatenübertragung die Decodierung der Daten deaktiviert werden.

Ferner kann anstelle des Interlaced-Video-Formats, bei dem sich ein Datenpaket aus jeweils zwei in den geraden und ungeraden Halbbildern des Video-Bildes abgelegten Teilpakten zusammensetzt, auch ein Non-Interlaced- bzw. Progressive-Video-Format verwendet werden.

Die physikalische Übertragung kann sowohl durch eine direkte digitale Übertragung als auch durch ein digitaldifferentielles Übertragungsformat ( LVDS = Low Voltage Differential Signaling), d.h. die Daten sind zusätzlich LVDS codiert, erfolgen. In einer nicht zur Erfindung gehörenden Ausfuhrungsform ist ebenfalls eine analoge Datenübertragung über eine analoge Video-Schnittstelle vorstellbar, wobei zusätzlich eine Digital-Analog- und Analog-Digital-Wandlung durchgeführt werden muss.

Falls nach Installation des Kraftfahrzeugsystems eine Modifikation beispielsweise des Datenspeichers für eine Aktualisierung erfolgen soll, können Bild-Daten, Programm-Daten oder dergleichen für Fehlerkorrekturen oder Design-Änderungen über die Video-Schnittstellenverbindung in das Anzeigeinstrument geladen werden. Dazu können die zu übertragenden Bilddaten von einer CD-ROM oder dergleichen über beispielsweise ein Laufwerk eines Navigationssystem in das Anzeigeinstrument bzw. dessen Speichereinrichtung überspielt und in den nicht-flüchtigen Speicher gespeichert werden.

## Patentansprüche

1. Verfahren zur Übertragung von Nicht-Video-Bilddaten über eine Video-Schnittstelle (4) von einer Sendereinheit (1) an eine Empfängereinheit (2), wobei die Sendereinheit (1) als eine Zentraleinheit und die Empfangseinheit (2) als ein Anzeigeinstrument eines Kraftfahrzeugsystemsausgeführt sind, mit folgenden Schritten:
Schreiben der zu übertragenden Nicht-Video-Bilddaten in eine erste mit der Video-Schnittstelle (4) verbundene Speichereinrichtung (10), die in der Sendereinheit (1) vorgesehen ist, Codieren der in die erste Speichereinrichtung (10) geschriebenen Nicht-Video-Bilddaten in Video-Bilddaten, in einem Video-Format digitales oder LVDS-codiertes Übertragen der in einem Video-Bild codierten Nicht-Video-Bilddaten als Video-Signal über die digitale Video-Schnittstelle (4) von der Sendereinheit (1) an die Empfängereinheit (2) unter Verwendung des gesamten sichtbaren Bereichs des Video-Bildes; Decodieren der von der Empfängereinheit (2) empfangenen Video-Bilddaten in die ursprünglichen Nicht-Video-Bilddaten und Schreiben der decodierten Nicht-Video-Bilddaten in eine zweite Speichereinrichtung (26), die in der Empfängereinheit (2) vorgesehen ist, wobei die Datenübertragung von der Sendereinheit (1) zu der Empfängereinheit (2) über eine zusätzliche bidirektionale CAN-Schnittstellenverbindung (5) zwischen der Sendereinheit (1) und der Empfängereinheit (2) derart initiiert wird, dass einer Computer-Steuereinheit der Sendeeinheit (2) von der Empfängereinheit (1) angezeigt wird, dass ein Beginn der Datenübertragung bevorsteht.

2. Verfahren nach Anspruch 1, **dadurch gekennzeichnet, dass** eine Bestätigungsnachricht, beispielsweise mittels Übermittlung von Prüfsummen, von der Empfängereinheit (2) an die Sendereinheit (1) über die zusätzliche CAN-Schnittstellenverbindung (5), zwischen der Sendereinheit (1) und der Empfängereinheit (2) übertragen wird.

3. Verfahren nach einem der vorhergehenden Ansprüche, **dadurch gekennzeichnet, dass** eine erneute Datenübertragung durchgeführt wird, falls eine positive Bestätigungsnachricht ausbleibt.

4. Verfahren nach einem der vorhergehenden Ansprüche, **dadurch gekennzeichnet, dass** der nicht-sichtbare Bereich des Video-Bildes zusätzlich für die Datenübertragung verwendet wird.

5. Verfahren nach einem der vorhergehenden Ansprüche, **dadurch gekennzeichnet, dass** als Datenübertragungsformat ein Interlaced-Video-Format verwendet wird.

6. Verfahren nach einem der Ansprüche 1 bis 5, **dadurch gekennzeichnet, dass** als Datenübertragungsformat ein Progressive-Video-Format verwendet wird.

7. Verfahren nach einem der vorhergehenden Ansprüche, **dadurch gekennzeichnet, dass** mehrere Datenpakete in einem Video-Bild abgelegt werden.

8. Verfahren nach einem der Ansprüche 1 bis 6, **dadurch gekennzeichnet, dass** ein Datenpaket aus mehreren Video-Bildinhalten zusammengesetzt wird.

## Claims

1. Method for the transmission of non-video-picture data via a video interface (4) from a transmitter unit (1) to a receiver unit (2), the transmitter unit (1) being embodied as a central unit and the receiving unit (2) being embodied as an indicating instrument of a motor vehicle system, comprising the following steps: writing of the non-video-picture data to be transmitted to a first memory device (10), which is connected to the video interface (4) and is provided in the transmitter unit (1), coding of the non-video-picture data written to the first memory device (10) into video picture data in a video format, digital or LVDS-coded transmission of the non-video-picture data coded in a video picture as video signal via the digital video interface (4) from the transmitter unit (1) to the receiver unit (2) using the entire visible region of the video picture, decoding of the video picture data received by the receiver unit (2) into the original non-video-picture data and writing of the decoded non-video-picture data to a second memory device (26), which is provided in the receiver unit (2), the data transmission from the transmitter unit (1) to the receiver unit (2) being initiated via an additional bidirectional CAN interface connection (5) between the transmitter unit (1) and the receiver unit (2) in such a way that the receiver unit (1) indicates to a computer control unit of the transmission unit (2) that a start of the data transmission is imminent.

2. Method according to Claim 1, **characterized in that** a confirmation message is transmitted, for example, by means of the communication of checksums, from the receiver unit (2) to the transmitter unit (1) via the additional CAN interface connection (5) between the transmitter unit (1) and the receiver unit (2).

3. Method according to one of the preceding claims, **characterized in that** a renewed data transmission is carried out if a positive confirmation message fails to appear.

4. Method according to one of the preceding claims, **characterized in that** the non-visible region of the video picture is additionally used for the data transmission.

5. Method according to one of the preceding claims, **characterized in that** an interlaced video format is used as the data transmission format.

6. Method according to one of Claims 1 to 5, **characterized in that** a progressive video format is used as the data transmission format.

7. Method according to one of the preceding claims, **characterized in that** a plurality of data packets are stored in a video picture.

8. Method according to one of Claims 1 to 6, **characterized in that** a data packet is composed of a plurality of video picture contents.

## Revendications

1. Procédé de transmission de données d'images non vidéo par une interface vidéo (4), depuis une unité d'émission (1) vers une unité de réception (2), l'unité d'émission (1) étant réalisée sous la forme d'une unité centrale et l'unité de réception (2) sous la forme d'un instrument d'affichage d'un système de véhicule automobile, comprenant les étapes suivantes consistant à :
- écrire dans un premier dispositif de mémoire (10) relié à l'interface vidéo (4) et prévu dans l'unité d'émission (1) les données d'images non-vidéo à transmettre,
- coder en données d'images vidéo les données d'images non vidéo écrites dans le premier dispositif de mémoire (10),
- transmettre dans un Format Vidéo, numériquement ou par codage LVDS, les données d'images non-vidéo qui ont été codées dans une image vidéo en tant que signal vidéo, par l'interface vidéo numérique (4) depuis l'unité d'émission (1) vers l'unité de réception (2) en utilisant l'ensemble du domaine visible de l'image vidéo,
- décoder les données d'images vidéo reçues par l'unité de réception (2) pour obtenir les données d'images non-vidéo originales, et
- écrire les données d'images non vidéo décodées dans un deuxième dispositif de mémoire (26) prévu dans l'unité de réception (2),
la transmission de données de l'unité d'émission (1) vers l'unité de réception (2) étant initiée par une liaison d'interface CAN bidirectionnelle supplémentaire (5) entre l'unité d'émission (1) et l'unité de réception (2) de telle sorte que l'unité de réception (1) indique à une unité de commande informatique de l'unité d'émission (2) qu'une transmission de données a commencé.

2. Procédé selon la revendication 1,
**caractérisé en ce qu'**
un message de confirmation est transmis, par exemple à l'aide d'une transmission de sommes de contrôle, de l'unité de réception (2) vers l'unité d'émission (1) par la liaison d'interface CAN supplémentaire (5), entre l'unité d'émission (1) et l'unité de réception (2).

3. Procédé selon l'une des revendications précédentes,
**caractérisé en ce qu'**
une nouvelle transmission de données est réalisée en l'absence de message de confirmation positif.

4. Procédé selon l'une des revendications précédentes,
**caractérisé en ce qu'**
on utilise en outre le domaine non visible de l'image vidéo pour la transmission de données.

5. Procédé selon l'une des revendications précédentes,
**caractérisé en ce qu'**
on utilise un format vidéo entrelacé pour le format de transmission de données.

6. Procédé selon l'une des revendications 1 à 5,
**caractérisé en ce qu'**
on utilise un format vidéo progressif pour le format de transmission de données.

7. Procédé selon l'une des revendications précédentes,
**caractérisé en ce que**
plusieurs paquets de données sont déposés dans une image vidéo.

8. Procédé selon l'une des revendications 1 à 6,
**caractérisé en ce qu'**
un paquet de données est composé de plusieurs objets d'images vidéo.
